# EUROPÄISCHE PATENTSCHRIFT

(11) **EP 1 291 071 B1**
(45) Veröffentlichungstag und Bekanntmachung des Hinweises auf die Patenterteilung: **08.03.2006**
(21) Anmeldenummer: 02018817.3
(22) Anmeldetag: 23.08.2002
(51) Int. Cl.: B01J 2/10

(54) **Verfahren zur Herstellung eines homogenen Granulates**
Process for making a homogeneous granulate
Procédé pour obtenir un granulat homogène

(30) Priorität: 07.09.2001 DE 10143901
(43) Veröffentlichungstag der Anmeldung: 12.03.2003
(73) Patentinhaber: IPC Process-Center GmbH & Co., 01277 Dresden (DE)
(72) Erfinder: Kempe, Wolfgang, 01169 Dresden (DE)
(74) Vertreter: Pätzelt, Peter

(56) Entgegenhaltungen:
- WO-A-00/64573
- US-A- 3 760 051
- US-A- 4 059 538
- US-A- 5 516 448

## Beschreibung

Die Erfindung betrifft eine Verfahren zur Herstellung eines homogenen Granulates, bei dem ein pulverförmiger Ausgangsstoff in eine Umwälzbewegung versetzt und darauf ein flüssiges Bindemittel aufgebracht wird, derart, dass sich feuchte Agglomerate ausbilden. Dabei können als pulverförmiger Ausgangsstoff beliebige Stoffe oder Stoffgemische eingesetzt werden. Als flüssiges Bindemittel kann die breite technologisch vorteilhafte Palette von Wasser bis pastöse Suspension mit Wirkstoffen eingesetzt werden.

Nach dem Stand der Technik sind verschiedene Lösungen bekannt, bei denen auf einen in eine Umwälzbewegung versetzten pulverförmigen Ausgangsstoff ein Bindemittel aufgesprüht wird.

In der WO 00/16886 wird eine Einrichtung zur Herstellung eines schüttfähigen Produktes und ein Verfahren zu deren Anwendung angegeben. Die Einrichtung besteht aus einer Rotorkammer, in der ein Rotor mit vertikaler Rotorachse angeordnet ist. Der Rotor weist mindestens in seinem radial äußeren Drittel die Form eines Kegelmantels und statisch an der inneren Wandung der Rotorkammer angeordneten Leitschaufeln auf. Verfahrensgemäß wird in die Einrichtung zur Herstellung eines schüttfähigen Produktes mindestens ein pulverförmiger Ausgangsstoff eingebracht und in eine Umwälzbewegung versetzt. Unter Zugabe eines flüssigen oder pastösen Bindemittels werden aus dem pulverförmigen Ausgangsstoff und dem Bindemittel z.B. feuchte Basiskerne hergestellt.

Die WO-A-0064573 offenbart ein Verfahren zur Herstellung von Pellets, wobei Bauxit zusammen mit einem Bindemittel (Carboxlymethylzellulose) in einen Mischer gegeben wird, während der Zugabe des Bindemittels die Umdrehungszahl des Rotors von 300 auf 3000 U/min gesteigert wird, anschliessend eine Phase des intensiven Durchmischens während 80 Sekunden bei einer Umdrehungszahl von 3000 U/min folgt, was zu einer Ausbildung von homogenen Pellets führt und danach die Umdrehungszahl für 4 min auf 300 U/min reduziert wird. Dabei es kommt unter Zugabe einer weiteren Menge des pulverförmigen Ausgangsstoffs zur Bildung von pelletierten Granulaten, die durchschnittlich geringfügig grösser sind als die Pellets nach der Phase mit hoher Umdrehungszahl.

Strukturell bindet das tröpfchenartig eingebrachte Bindemittel an seiner Oberfläche jeweils allseitig den pulverförmigen Ausgangsstoff zu einem Ausgangselement. In der Folge vergrößert sich das Ausgangselement relativ schnell

durch Adhäsion weiterer Teilchen des pulverförmigen Ausgangsstoffes, so lange der Feuchtegehalt des sich aufbauenden Granulatteilchens eine ausreichende Adhäsionskraft bewirkt oder ein neues Tröpfchen des Bindemittels auf das vorhandene Granulatteilchen auftrifft. Dabei ist die Wahrscheinlichkeit, dass ein großes Granulatteilchen durch ein Bindemitteltröpfchen getroffen wird, wesentlich höher als bei einem kleinen Granulatteilchen bzw. einem Pulverteilchen des Ausgangsstoffes. In der Folge entsteht ein Granulat mit sehr unterschiedlicher Größe der einzelnen Granulatteilchen. Das ist in der Praxis meist unerwünscht oder auch nachteilig für weitere Prozesse.

Der Erfindung liegt damit als Aufgabe zu Grunde, eine Verfahren zur Herstellung eines Granulates der eingangs genannten Art anzugeben, mit dem bei geringem technischen Aufwand ein im Wesentlichen homogenes Granulat hergestellt werden kann.

Die Erfindung löst die Aufgabe durch die im kennzeichnenden Teil des Anspruchs 1 angegebenen Merkmale. Vorteilhafte Weiterbildungen der Erfindung sind in den jeweiligen Unteransprüchen gekennzeichnet und werden nachstehend zusammen mit der Beschreibung der bevorzugten Ausführung der Erfindung näher dargestellt.

Das Wesen der Erfindung besteht darin, dass ein nach dem Stand der Technik aus einem pulverförmigen Ausgangsstoff und einem flüssigen Bindemittel hergestelltes Granulat, das technologisch bedingt eine sehr unterschiedliche Größe der einzelnen Granulatteilchen in Form von Agglomeraten und individuell einen unterschiedlichen Feuchtigkeitsgrades aufweist, in einem weiteren Verfahrensschritt ohne Zuführung eines Bindemittels einer Bewegungsenergie ausgesetzt wird, die geeignet ist, die Agglomerate zu zerstören, bis das Granulat im Wesentlichen eine homogene Größe aufweist.

Die tatsächliche Größe ist von den gegebenen technologischen Bedingungen abhängig. In jedem Fall liegt die Größe des so behandelten Granulates wesentlich unterhalb der Größe des größten Agglomeratteilchens und über der Größe des eingesetzten pulverförmigen Ausgangsstoffes. Die wesentlichsten Einflussfaktoren sind dabei der Feuchtigkeitsgehalt insgesamt und die auf die Granulatteilchen einwirkende Bewegungsenergie.

Die Bewegungsenergie kann unter Ausnutzung verschiedener technischer Mittel auf die Agglomerate einwirken. So ist es möglich, spezifische Luftströmungen zu erzeugen. In der Praxis hat es sich aber als vorteilhaft erwiesen, die höhere Bewegungsenergie durch Erhöhung der Drehzahl des Rotors der Granuliereinrichtung einzubringen.

Unter bestimmten Bedingungen, d.h. bei bestimmten Ausgangsstoffen und Bindemittel, kann das erfindungsgemäße Ergebnis auch in einer Abwandlung der Erfindung erreicht werden, indem nach Beendigung der Bindemittelzufuhr die Bewegungsenergie unverändert zugeführt wird, bis der erfinderische Effekt eintritt. Dabei wirken die in den unterschiedlich großen Agglomeraten mit ihren unterschiedlichen kinetischen Energien aufeinander ein, bis sich ein homogenes Granulat ausgebildet hat. Eine derart abgewandelte Verfahrensführung führt jedoch in der Praxis zu einer erheblichen Verlängerung der Prozesszeit, was meist nicht vertretbar ist.

Bei dem erfindungsgemäßen Verfahrensschritt werden die großen Granulatteilchen, die selbst eine örtlich relativ unterschiedliche Verteilung der Feuchtigkeit durch das eingebrachte Bindemittel aufweisen, durch die Einwirkung der als Druck- und Scherkräfte einwirkende Bewegungsenergie an ihren trockenen Abschnitten zerbrochen und es entstehen kleinere Granulatteilchen. Die insgesamt vorhandene Feuchtigkeit wird dadurch in vorteilhafter Weise homogenisiert. Kleinere Granulatteilchen und vorhandenes pulverförmiges Ausgangsmaterial können an größere Granulatteilchen mit höherem Feuchtigkeitsgehalt gebunden werden bis im Durchschnitt ein einheitlicher Feuchtegrad in allen einzelnen Granulatteilchen eingestellt wurde.

Mit der Erfindung kann bei ausreichender und andauernder Einwirkung einer Bewegungsenergie auf die ursprünglich unterschiedlich großen Agglomerate in überraschender Weise ein sehr homogenes Granulat mit gleichmäßigem Feuchtigkeitsgehalt hergestellt werden. Der Teilungs- und Zusammenballungsprozess ist dann weitgehend beendet, wenn in allen einzelnen Granulatteilchen der gleiche Feuchtegrad eingestellt ist.

In einem nachfolgenden erfindungsgemäßen Verfahrensschritt wird das bereits weitgehend homogene Granulat unter Einwirkung einer geringeren Bewegungsenergie umgewälzt, mit der Folge, dass sich mehrere der kleinen Granulatteilchen zu größeren Granulatteilchen zusammenballen oder aufrollen, deren Größe wieder von den geänderten Bedingungen abhängig ist.

Wird nach Anspruch 2 der Feuchtigkeitsgehalt in Abhängigkeit des eingesetzten pulverförmigen Ausgangsstoffes und des verwendeten Bindemittels relativ gering gehalten, ist die Herstellung eines Granulates möglich, dessen Größe in der Nähe des pulverförmigen Ausgangsstoffes liegt. D.h. nur wenige Pulverteilchen werden durch eine minimale Menge des Bindemittels als miniaturisiertes homogenes Granulat zusammengehalten.

Das homogene Granulat kann danach mit Mitteln des Standes der Technik weiter beschichtet werden, ohne dass die vorhandene Homogenität des Granulates eingebüßt wird. Gegebenenfalls kann der erfindungsgemäße Verfahrensschritt zu einem späteren Zeitpunkt mit größeren Granulatteilchen oder mit einer neuen Beschichtung wiederholt werden.

Die Erfindung wird nachstehend an einem Ausführungsbeispiel näher erläutert.

Beispielhaft soll ein homogenen Granulat aus einem Metallpulver hergestellt werden, welches als Pulverteilchen eine blättchenartige Struktur aufweist. Derartige Ausgangsstoffe bilden bei der Anwendung von Verfahren nach dem Stand der Technik im besonderen Maße größenmäßig sehr unterschiedliche Granulate aus. Der Einsatz derartig größenmäßig inhomogener Granulate ist in der Praxis oft sehr problematisch oder in bestimmten Fällen auch grundsätzlich nicht möglich. Unter Anwendung des erfindungsgemäßen Verfahrens soll ein homogenes Granulat hergestellt werden.

Das Metallpulver wird in den Rotor einer geeigneten Einrichtung mit vertikaler Rotorachse eingebracht und in eine radial periphere Umwälzung versetzt. Aus einer oben angeordneten Sprühdüse wird entsprechend dem bekannten Stand der Technik ein Bindemittel auf das Metallpulver aufgesprüht und ein Granulat hergestellt. Dieses Granulat besteht in bekannter Weise aus Agglomeraten sehr unterschiedlicher Größe. Die Größe der Teilchen reicht im Ausführungsbeispiel von 5 mm Durchmesser bis zu ungebundenen Metallpulverteilchen in der Größe des Ausgangsmaterials.

Die Menge des zugesetzten Bindemittels zu der bestimmten Menge des Metallpulvers wurde empirisch derart bestimmt, dass im nachfolgenden erfindungsgemäßen Verfahrensschritt ohne Zufuhr eines Bindemittels die vorhandenen inhomogenen Agglomerate bei einer Erhöhung der Bewegungsenergie durch Druckkräfte zerstört werden bis ein Granulat ausgebildet ist, welches einen einheitlichen homogenen Feuchtigkeitsgrad aufweist und in der Folge dessen auch eine weitgehend homogene Größe der einzelnen Granulatteilchen.

Im Ausführungsbeispiel wurde eine Granuliereinrichtung mit vertikaler Rotorachse und einem Rotordurchmesser von 250mm eingesetzt. Zur Herstellung der Agglomerate nach dem Stand der Technik wurde eine Drehzahl von 50 Umdrehungen pro Minute (¹/min) gewählt. Die dabei sich ausbildenden Agglomerate weisen unterschiedliche Durchmesser bis ca. 5 mm auf, wobei auch ungebundenes Metallpulver im Rotor vorhanden ist. Im nachfolgenden erfindungsgemäßen Verfahrensschritt, wird ohne Zufuhr eines Bindemittels die auf die Agglomerate einwirkende Bewegungsenergie durch Erhöhung der Drehzahl des Rotors auf 400 ¹/min wesentlich erhöht.

Dadurch werden die unterschiedlichen Agglomerate zerstört und es bildet sich ein Granulat mit einem mitteleren Durchmesser von 0,4 mm aus.

In einem weiteren Verfahrensschritt wird die Drehzahl des Rotors wieder auf 100 ¹/min gesenkt, wobei sich die vorhandenen kleinen Granulate unter den geänderten kinetischen Bedingungen zu größeren Granulatteilchen von ca. 2,5mm Durchmesser Aufrollen. Die Homogenität der Größe wird dabei unverändert beibehalten, da die einzelnen Granulatteilchen durch den vorangegangenen Verfahrensschritt eine sehr gleichmäßige Feuchtigkeit aufweisen.

Dieses Granulat kann getrocknet werden. Mit Mitteln des Standes der Technik kann auf das Granulat in weiteren Verfahrensschritten auch eine spezifische Beschichtung aufgebracht werden.

Die Erfindung ist selbstverständlich nicht auf das beschriebene Ausführungsbeispiel beschränkt. Die Erfindung kann bei allen Lösungen des Standes der Technik entsprechend dem Oberbegriff des Anspruchs 1 zusätzlich angewendet werden. So ist es ohne weiteres möglich, homogene Ausgangsgranulate als Trägerelemente, z.B. Zuckergranulate oder Zellstoffgranulate, für die Pharmaindustrie zur Herstellung von medizinischen Präparaten herzustellen.

## Patentansprüche

1. Verfahren zur Herstellung eines homogenen Granulates, bei dem ein pulverförmiger Ausgangsstoff in eine Umwälzbewegung versetzt wird und darauf ein flüssiges Bindemittel aufgebracht wird, derart dass sich feuchte Agglomerate bilden, **dadurch gekennzeichnet, dass** die Agglomerate in einem nachfolgenden Verfahrensschritt ohne Zufuhr von Bindemittel einer Bewegungsenergie ausgesetzt werden, die geeignet ist, die Agglomerate zu zerstören, wobei das Verfahren so lange fortgesetzt wird, bis die Agglomerate im Wesentlichen in ein homogenes Granulat umgewandelt sind und dass dieses Granulat nachfolgend einer geringeren Bewegungsenergie ausgesetzt wird, derart dass mehrere einzelne Granulatteilchen zu einem größeren Granulatteilchen aufgerollt werden.

2. Verfahren nach Anspruch 1, **dadurch gekennzeichnet, dass** die Art und Menge des eingesetzten pulverförmigen Ausgangsstoffes und des eingesetzten Bindemittels derart gewählt wird, dass das sich ausbildende Granulat eine Größe von einigen wenigen pulverförmigen Teilchen des Ausgangsstoffes aufweist.

3. Verfahren nach Anspruch 1 oder 2, **dadurch gekennzeichnet, dass** das homogene Granulat mittels eines bekannten Verfahrens beschichtet wird.

## Revendications

1. Procédé de fabrication d'un granulat homogène, dans lequel une substance de départ pulvérulente est mise en circulation et l'on applique pardessus un liant liquide, de telle sorte qu'il se forme des agglomérats humides, **caractérisé en ce que** les agglomérats, dans une étape de procédé subséquente, sont exposés à une énergie de mouvement sans apport de liant, laquelle est prévue pour désintégrer les agglomérats, le procédé étant poursuivi jusqu'à ce que les agglomérats soient essentiellement transformés en un granulat homogène et **en ce que** ce granulat est ensuite exposé à une plus faible énergie de mouvement de telle sorte que plusieurs particules de granulat individuelles soient roulées pour former une particule de granulat plus grosse.

2. Procédé selon la revendication 1, **caractérisé en ce que** le type et la quantité de substance de départ pulvérulente utilisée et de liant utilisé sont choisis de telle sorte que le granulat se formant présente une taille de quelques particules pulvérulentes de substance de départ.

3. Procédé selon la revendication 1 ou 2, **caractérisé en ce que** le granulat homogène est revêtu au moyen d'un procédé connu.

## Claims

1. Process for the production of homogeneous granules, in which a pulverulent starting material is caused to circulate and a liquid binder is applied thereto in such a way that moist agglomerates form, **characterized in that** in a subsequent process step without supply of binder, the agglomerates are exposed to a kinetic energy which is suitable for destroying the agglomerates, the process being continued until the agglomerates have substantially been converted into homogeneous granules, and **in that** these granules are subsequently exposed to a lower kinetic energy in such a way that a plurality of individual granular particles are combined by rolling to form a larger granular particle.

2. Process according to Claim 1, **characterized in that** the type and amount of the pulverulent starting material used and of the binder used are chosen so that the resulting granules have a size of a few pulverulent particles of the starting material.

3. Process according to Claim 1 or 2, **characterized in that** the homogeneous granules are coated by means of a known method.
